# FASCICULE DE BREVET EUROPEEN

(11) **EP 3 222 900 B1**
(45) Date de publication et mention de la délivrance du brevet: **22.04.2020**
(21) Numéro de dépôt: 17162086.7
(22) Date de dépôt: 21.03.2017
(51) Int. Cl.: F21L 4/02, F21V 21/08, F21Y 115/10

(54) **LAMPE FRONTALE DOTÉE D'UNE SIGNALISATION ARRIÈRE**
FRONTLAMPE MIT SEITIGER SIGNALEINHEIT
HEADLAMP WITH REAR SIGNALING

(30) Priorité: 22.03.2016 FR 1600477
(43) Date de publication de la demande: 27.09.2017
(73) Titulaire: Zedel, 38920 Crolles (FR)
(72) Inventeur: GAGNEUX, Thiphaine, 38000 Grenoble (FR)
(74) Mandataire: Schuffenecker, Thierry

(56) Documents cités:
- US-A1- 2008 192 459
- US-A1- 2015 115 803

## Description

### Domaine technique de l'invention

La présente invention concerne les lampes frontales et notamment une lampe frontale dotée d'une signalisation à l'arrière.

### Etat de la technique

Les lampes frontales ont connu un développement significatif depuis quelques années et leur utilisation se répand dans toutes les activités humaines, notamment professionnelles, sportives et ludiques.

D'une manière générale, la source d'énergie qui alimente la lampe - qu'il s'agisse de piles ou d'accumulateurs - se trouve dans un boîtier placé dans la lampe frontale elle-même, à l'arrière de la tête ou déporté, par exemple à la ceinture.

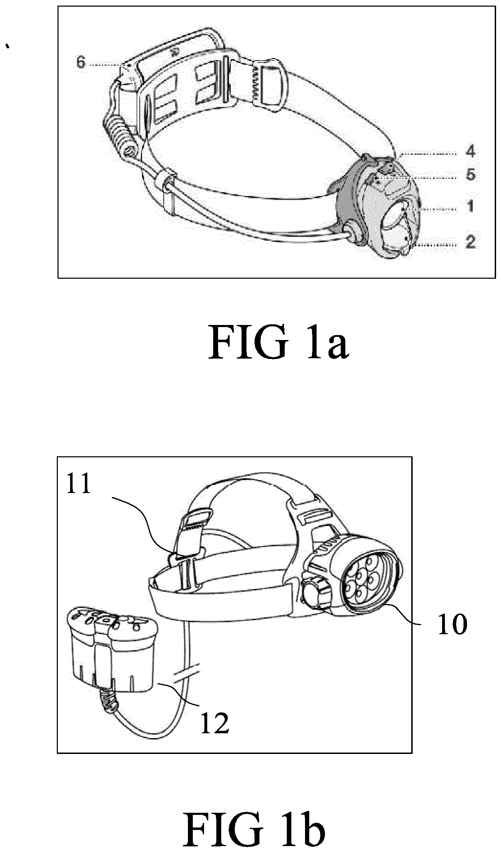

La figure 1a illustre un exemple de lampe frontale connue 2 comportant deux boîtiers respectivement avant et arrière. Un premier boîtier 2 compose le corps même de la lampe, dotée d'une source lumineuse 1 et de boutons de commandes 4 et 5 - et est fixé à l'avant, sur la tête de l'utilisateur. Un second boîtier 6 sert de logement pour la source d'alimentation et est positionné à l'arrière du bandeau élastique. Certaines lampes frontales de ce type utilisent la présence du boîtier arrière pour assurer une signalisation arrière fort utile pour la sécurité du porteur de la lampe.

La figure 1b montre un autre exemple de réalisation d'une lampe 10 fixée sur la tête d'un utilisateur au moyen d'un bandeau élastique 11 et donc le second boîtier 12 est déporté pour être fixé, par exemple, à la ceinture de l'utilisateur.

Dans les lampes frontales dites compactes, la source d'énergie est logée à l'avant, à l'intérieur même du boîtier qui compose la lampe frontale, en sorte que cette dernière ne nécessite plus qu'un bandeau élastique pour son utilisation. En raison de leur simplicité de réalisation, mais également de leur coût très modiques, ces lampes frontales compactes rencontrent un fort succès et leur utilisation tend à se généraliser.

Malheureusement, les lampes compactes connues ne permettent qu'une fonctionnalité de base, exclusive notamment de toute possibilité de signalisation arrière.

Il serait bon de pouvoir étendre, sans frais excessif, les possibilités des lampes compactes afin de les doter de nouvelles fonctionnalités, notamment en matière de signalisation et de sécurité.

Plus généralement encore, il s'agit d'étendre les possibilités offertes par toutes les lampes frontales, celles qui sont compactes mais également les autres.

Tel est l'objet de la présente demande de brevet.

La demande de brevet US 2008/192459 décrit une structure de casque dotée d'une source lumineuse permettant d'agrémenter le confort et la sécurité d'un patient durant son sommeil. Le casque comporte un dispositif lumineux avec une détection de position, basé sur un capteur permettant de commuter le fonctionnement de la source lumineuse lorsque le patient se lève de son lit ou , au contraire, reste en position couchée.

La demande de brevet US 2015/115803 décrit une structure de lampe frontale pouvant être portée par un utilisateur ou pouvant être attaché à un objet comprenant un substrat, une première source de lumière, une seconde source de lumière et un capteur. Le capteur peut allumer les première et seconde sources de lumière lorsque la lumière frappant le capteur tombe en dessous d'un niveau d'intensité prédéterminé. Le capteur peut éteindre les première et seconde sources de lumière lorsque la lumière frappant le capteur dépasse un niveau d'intensité prédéterminé. Un commutateur de priorité peut permettre à l'utilisateur de garder les sources lumineuses complètement éclairées ou obscurcies, quel que soit le capteur.

### Exposé de l'invention

La présente invention a pour but de proposer une structure de lampe frontale, notamment compacte, permettant une nouvelle fonctionnalité de signalisation latérale et/ou arrière.

Un autre but de la présente invention consiste à proposer une lampe frontale présentant un agrément d'utilisation supérieur.

Un troisième but de la présente invention consiste à proposer une lampe frontale compacte pouvant être réalisée à moindre coût et qui accroît la sécurité de son utilisateur.

C'est un autre but de la présente invention que de fournir une lampe frontale permettant récupérer une partie du flux lumineux généré à l'intérieur du boîtier avant d'une lampe frontale compacte, et normalement perdu, afin de l'utiliser pour une signalisation latérale et/ou arrière.

L'invention réalise ces buts au moyen d'une lampe frontale telle que définie dans la revendication 1, et comportant un boîtier incorporant un module lumineux comprenant une source lumineuse et un bandeau de maintien permettant la fixation du boîtier sur la tête d'un utilisateur. La source lumineuse est configurée pour projeter un faisceau lumineux vers l'avant de la lampe frontale et le module lumineux comporte une interface de raccordement pour une moins une fibre optique La lampe est caractérisée en ce que le module lumineux comporte en outre une fibre optique au moins située sur le bandeau de maintien et comportant une première et une seconde extrémité, ladite première extrémité étant raccordée à ladite interface de raccordement du module lumineux. La lampe comporte en outre au moins un diffuseur optique situé latéralement ou à l'arrière du bandeau, ledit diffuseur optique étant configuré pour être raccordé à la seconde extrémité de la fibre optique en sorte que la source lumineuse permet simultanément la génération d'un faisceau lumineuse projeté vers l'avant et d'une signalisation lumineuse arrière ou latérale
Dans un mode de réalisation particulier, la ou les fibres optiques sont disposées à l'intérieur du bandeau de maintien.

Alternativement, la ou les fibres optiques sont disposées à l'extérieur du bandeau de maintien.

De préférence, le diffuseur optique est positionné à l'arrière du bandeau de maintien.

Dans un mode de réalisation spécifique, le bandeau comporte deux diffuseurs optiques positionnées sur une face latérale.

Dans un mode de réalisation particulier, la ou les fibres optiques sont tressées au sein dudit bandeau de maintien de manière à former un motif ou un logo lumineux .

De préférence, le bandeau de maintien comporte une première, une seconde et une troisième partie, dans lequel la première partie est une partie rigide ou semi-rigide, latérale gauche, ayant une première extrémité avant fixée audit boîtier de la lampe et une seconde extrémité arrière. La seconde partie est une partie rigide ou semi-rigide, latérale droite, ayant une première extrémité avant fixée audit boîtier et une seconde extrémité arrière. Enfin, la troisième partie est une partie élastique permettant le raccordement des extrémités arrières des première et seconde parties.

L'invention est particulièrement adaptée à la réalisation d'une lampe compacte comportant le module lumineux et une source d'alimentation.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1a illustre un exemple de lampe frontale connue comportant deux boîtiers, respectivement avant et arrière.
La figure 1b montre un autre exemple de réalisation d'une lampe frontale connue dans laquelle le second boîtier est fixé à la ceinture.
La figure 2 illustre une perspective avant d'un premier mode de réalisation d'une lampe frontale compacte conforme à la présente invention, comportant une fibre optique disposée sur le bandeau de maintien de la lampe.
La figure 3 illustre une perspective arrière du premier mode de réalisation mettant en évidence un diffuseur optique positionné à l'arrière du bandeau de maintien et auquel viennent se raccorder la ou les fibres optiques.
Les figures 4 illustre le détail du corps 21 d'une lampe compacte suivant le premier mode de réalisation, et comportant un module lumineux permettant le raccordement de deux fibres optiques.
La figure 5 illustre le détail de l'interface de raccordement des deux fibres optiques sur le module lumineux 50 que comporte la lampe.
La figure 6 illustre plus en détail le module lumineux 50 comportant sa source lumineuse et son interface de raccordement.
La figure 7 illustre le dispositif de signalisation localisé à l'arrière ou sur une face latérale du bandeau de maintien.
La figure 8 est une vue arrière d'une lampe compacte suivant le premier mode de réalisation.
La figure 9 illustre un second mode de réalisation d'une lampe frontale compacte comportant un bandeau de maintien doté de deux signalisations latérales.
La figure 10 illustre un troisième mode de réalisation comportant un bandeau de maintien ayant une fibre optique tissée dans le but de réaliser un affichage ou un motif souhaité, par exemple un logo.
La figure 11 illustre un quatrième mode de réalisation d'une lampe frontale compacte comportant un bandeau de maintien composé de deux parties, respectivement semi-rigides et élastiques .

### Description d'un mode de réalisation préféré

L'on décrit à présent comment l'on peut venir modifier de manière très économique la structure des lampes frontales, et notamment des lampes frontales compactes, afin de les doter d'une nouvelle fonctionnalité de signalisation du plus grand intérêt.

La description ci-après sera spécifiquement adaptée aux lampes compactes qui, clairement, représentent la catégorie de lampes frontales qui pourra tirer le plus grand avantage de cette nouvelle fonctionnalité de signalisation. Il est toutefois clair qu'il ne s'agit nullement d'une limitation et qu'un homme du métier pourra adapter la présente description à la réalisation d'une lampe frontale quelconque, notamment une lampe spécifique.

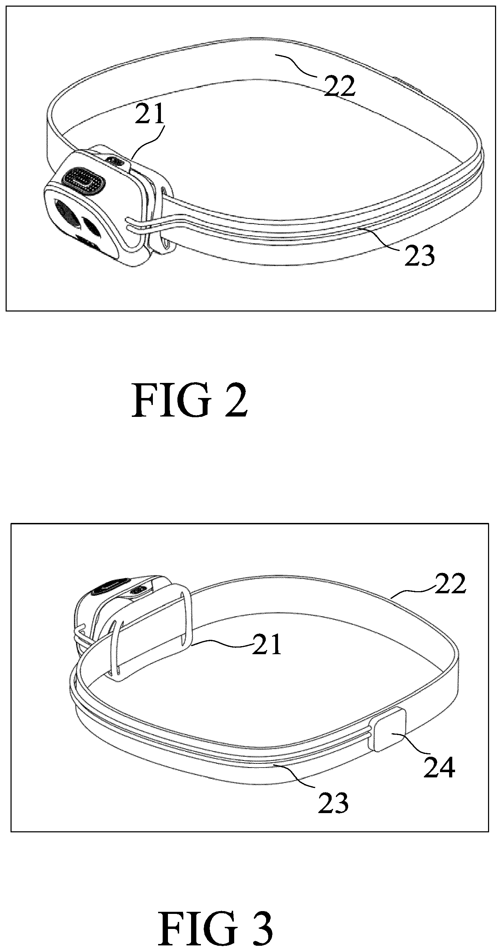

La figure 2 illustre une perspective avant d'un premier mode de réalisation d'une lampe frontale compacte conforme à la présente invention, comportant une fibre optique située sur un bandeau de maintien de la lampe et permettant un raccordement optique entre un boîtié situé à l'avant et un diffuseur lumineux situé à l'arrière. Cette lampe frontale comporte un boîtier compact 21 pouvant être fixé sur la tête d'un utilisateur, à l'avant, grâce à un bandeau de maintien 22, qui pourra par exemple prendre la forme d'un bandeau élastique ou semi-rigide . Le bandeau de maintien 22 comporte une ou plusieurs fibres optiques 23 destinée(s) à déporter vers l'arrière une partie de l'énergie lumineuse générée au sein du boîtier 21 et qui est normalement perdue. A cette fin, comme cela est représenté dans la perspective arrière de la figure 3, l'on dispose, à l'arrière du bandeau 22, un système de signalisation optique, sous la forme d'un diffuseur optique 24 par exemple, raccordé à la fibre optique ou au faisceau de fibres optiques.

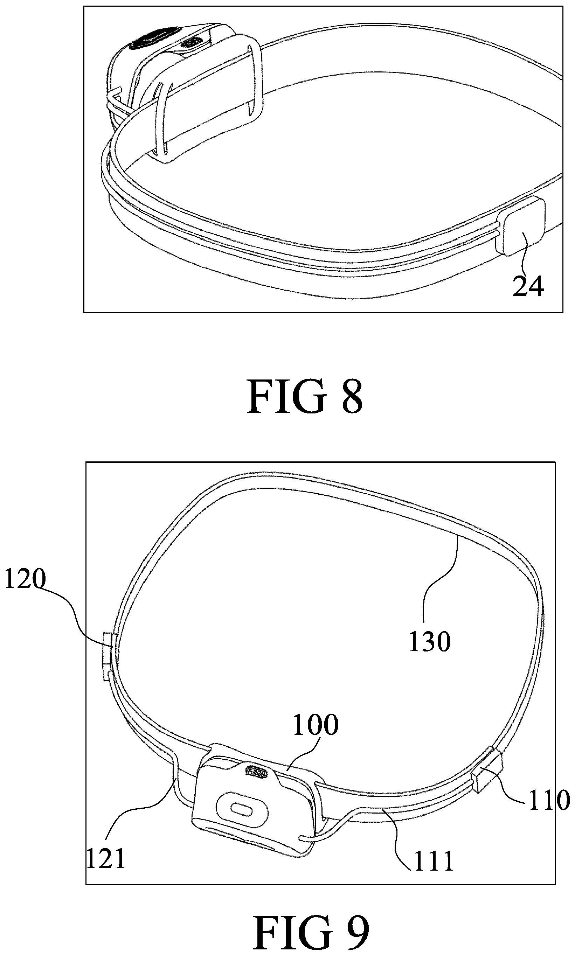

Dans le premier mode de réalisation qui est décrit, le système de signalisation 24 sera localisé à l'arrière du bandeau de maintien comme cela est représenté dans les figures 3 et 8, en sorte que le porteur de la lampe frontale selon l'invention pourra être visible de l'arrière, et ce sans source d'énergie supplémentaire .

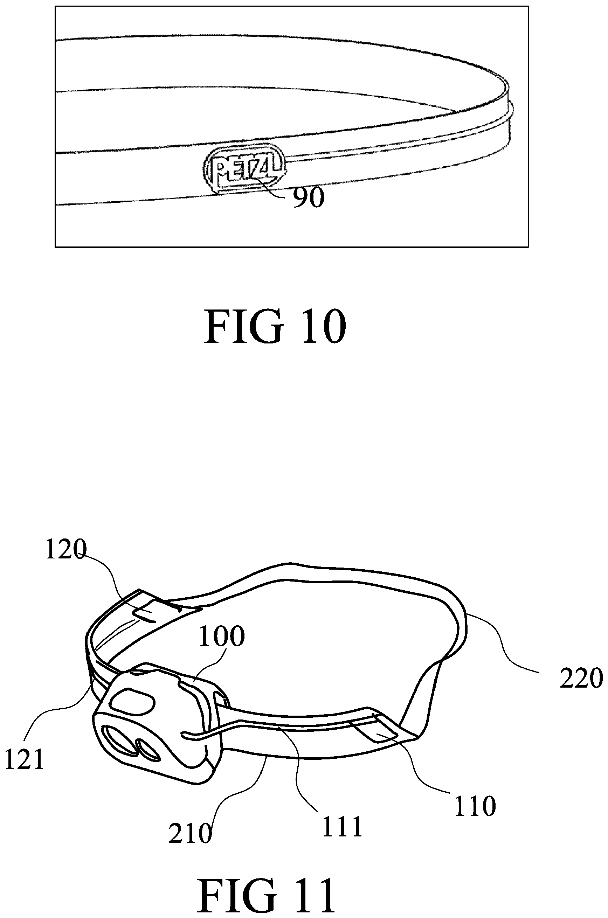

Dans un second mode de réalisation, comme celui illustré dans les figures 9 et 10, l'on pourra prévoir un ou plusieurs systèmes de signalisation disposés latéralement sur le bandeau de maintien 22.

Toute autre combinaison pourra être envisageable, et notamment un nombre quelconque de diffuseurs optiques.

Dans un mode de réalisation particulier, la ou les fibres optiques seront disposées à l'intérieur même du bandeau en sorte que la ou les fibres optiques ne seront pas visibles pour l'utilisateur . Alternativement, ces dernières pourront être fixées à l'extérieur du bandeau, ce qui permettra une réalisation plus aisée dans le cas d'un bandeau très élastique.

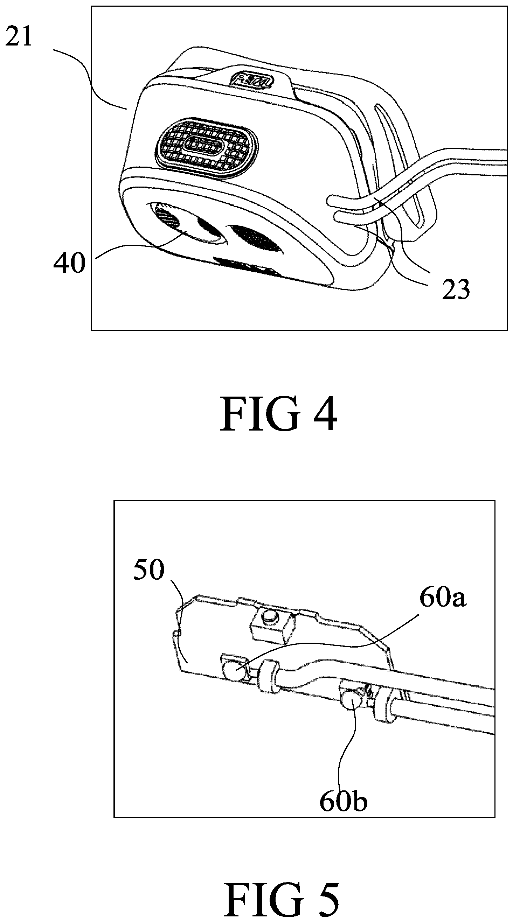

Les figures 4, 5 et 6 illustrent le détail du boîtier 21 d'une lampe compacte comportant un module lumineux 50 doté d'une source lumineuse 40, par exemple une LED, le module lumineux 50 comportant par ailleurs une interface de raccordement de deux fibres optiques.

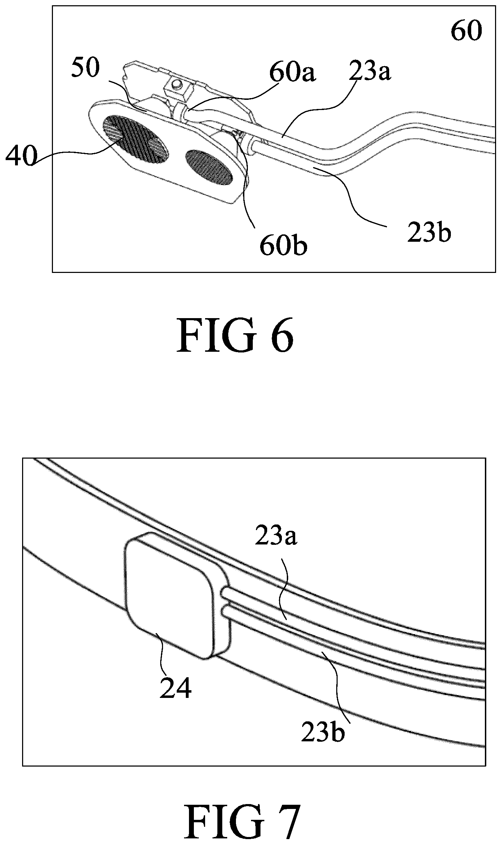

La figure 6 illustre plus en détail le module lumineux 50 qui comporte, outre la source lumineuse 40 (LED) et, à proximité de cette dernière, un premier module de raccordement 60a pour la première extrémité d'une première fibre optique 23a dans le but de permettre à cette première extrémité d'être mise en regard de la source lumineuse 40. Dans un mode de réalisation particulier, le module lumineux 50 comporte un second module de raccordement 60b proche de la source 40 ou même d'une seconde source lumineuse permettant le raccordement d'une première extrémité d'une seconde fibre optique 23b pour, une fois encore, permettre à la première extrémité de la seconde fibre optique d'être mise en regard de cette seconde source lumineuse. Une telle disposition n'est décrite qu'à des fins d'illustrations, pour montrer la grande possibilités de configurations possibles et ne saurait être limitatives. Clairement, l'on pourra envisager toutes les autres combinaisons opportunes en fonction d'une application donnée.

La figure 7 illustre le détail du diffuseur optique 24 du premier mode de réalisation situé à l'arrière du bandeau auquel sont connectées les secondes extrémités des fibres optiques 23a et 23b.

La figure 8 est une vue arrière d'une lampe compacte suivant le premier mode de réalisation selon l'invention.

La figure 9 illustre une vue de dessus d'une lampe compacte 100 suivant un second mode de réalisation selon l'invention dans lequel deux diffuseurs optiques 110 et 120 sont disposés latéralement sur un bandeau de maintien 130, respectivement à gauche et à droite (par rapport au porteur de la lampe). Deux fibres optiques gauche et droite, respectivement 111 et 121, servent au raccordement lumineux entre le boîtier 100 et chacun des diffuseurs 110 et 120.

La figure 10 est une illustration d'un troisième mode de réalisation dans lequel la fibre optique est intimement incorporée au sein du bandeau de maintien et notamment par un procédé de tissage quelconque, dans le but de rendre ce même bandeau lumineux. A cet effet, la ou les fibres optiques peuvent constituer les fils de trames ou les fils de chaîne et sont éventuellement associées à des fibres classiques, par exemple du coton, du lin, de la soie ou des fibres textiles synthétiques. Les fibres peuvent être regroupées en un ou plusieurs faisceaux et constituer, ainsi, un certain nombre de motifs lumineux qui pourront apparaître sur le bandeau de maintien de la lampe frontale. L'on peut ainsi venir mettre avantageusement en valeur un logo ou un motif spécifique représenté sur le bandeau de maintien.

Les extrémités d'alimentation des fibres constitutives du ou des faisceaux seront raccordées au module lumineux logé à l'intérieur de la lampe frontale et les autres extrémités de ces mêmes fibres seront directement raccordées au diffuseur 24, par exemple.

La figure 11 illustre un quatrième mode de réalisation d'une lampe frontale comportant un boîtier auquel est raccordé un bandeau de maintien complexe, comportant deux parties. Le bandeau de maintien comporte une première partie avant rigide ou semi-rigide 210, sur laquelle vient se fixer le boîtier 100 de la lampe compacte. Le bandeau de maintien comporte en outre une seconde partie élastique 220, permettant de faciliter la fixation du bandeau sur la tête d'un utilisateur.

Dans la disposition qui est représentée en figure 11, les fibres optiques 111 et 121 sont exclusivement disposées sur la première partie 210 du bandeau lumineux et viennent se raccorder chacune sur un diffuseur optique latéral, respectivement droit 120 et gauche 110, disposé également sur la partie avant 210 du bandeau en sorte que la fixation de la fibre optique ou du faisceau de fibres optiques 111/121, respectivement droite et gauche, ne posera aucune difficulté majeure.

Dans le quatrième mode de réalisation illustré en figure 11, l'on trouve donc deux système de signalisation latéraux, tous deux positionnés sur la partie rigide ou semi-rigide avant du bandeau de maintien, fermé par la partie élastique 220 qui sera dénué de toute fibre optique.

Cette disposition est particulièrement avantageuse car elle permet, outre la possibilité d'opter pour un bandeau comportant une partie arrière très élastique, assurant la fixation de la lampe frontale sur la tête de l'utilisateur, d'offrir deux signalisations latérales, respectivement droite et gauche. Cette double signalisation latérale peut aisément se substituer à une signalisation arrière, telle que représentée dans la figure 3 ou 8 et l'on a observé, en pratique, que les multiples mouvements de tête d'un porteur d'une lampe frontale rendent aisément visibles l'une ou l'autre des deux signalisations latérales.

Le grand avantage des modes de réalisation qui viennent d'être décrits résident dans le fait que, d'abord, la lampe frontale peut conserver une structure économique basée sur un unique boîtier et que, ensuite, la fonction nouvelle de signalisation qui est apportée par la présente invention peut être alimentée par la partie du flux lumineux qui est générée à l'intérieur du boîtier 21 de la lampe et qui, normalement, reste perdue.

Par conséquent, aucune consommation supplémentaire de courant n'est requise pour réaliser cette fonction de signalisation.

L'invention permet donc une fonctionnalité particulièrement efficace et ce au moyen d'une réalisation élégante et particulièrement économique .

## Revendications

1. Lampe frontale comportant :
un boîtier (21, 100) compact, pouvant être fixé sur la tête d'un utilisateur vers l'avant grâce à un bandeau de maintien, ledit boîtier comprenant un module lumineux (50) dotée d'une source lumineuse, ledit module lumineux (50) comportant une interface de raccordement pour une moins une fibre optique (23a, 23b) ; et
un bandeau de maintien (22) permettant la fixation du boîtier sur la tête d'un utilisateur,
**caractérisée en ce qu'**elle comporte en outre :
une fibre optique au moins disposée à l'intérieur du bandeau de maintien ou alternativement à l'extérieur et comportant une première et une seconde extrémité, ladite première extrémité étant raccordée à ladite interface de raccordement du module lumineux (50) ;
au moins un diffuseur optique situé latéralement ou à l'arrière du bandeau, ledit diffuseur optique étant raccordé à la seconde extrémité de la fibre optique ;
en sorte que la source lumineuse permet simultanément la génération d'un faisceau lumineux projeté vers l'avant et d'une signalisation lumineuse arrière ou latérale.

2. Lampe frontale selon la revendication 1 **caractérisée en ce que** la ou les fibres optiques sont disposées à l'intérieur du bandeau de maintien (22).

3. Lampe frontale selon la revendication 1 **caractérisée en ce que** la ou les fibres optiques sont disposées à l'extérieur du bandeau de maintien (22).

4. Lampe frontale selon la revendication 1 **caractérisée en ce que** ledit diffuseur optique est positionné à l'arrière du bandeau de maintien.

5. Lampe frontale selon la revendication 1 **caractérisée en ce que** le bandeau comporte deux diffuseurs optiques positionnés chacun sur une face latérale.

6. Lampe frontale selon la revendication 1 **caractérisée en ce que** la ou les fibres optiques sont tressées au sein dudit bandeau de maintien de manière à former un motif ou un logo lumineux .

7. Lampe frontale selon la revendication 6 **caractérisée en ce que** la ou les fibres optiques sont incorporées au sein du bandeau de maintien au moyen d'un procédé de tissage quelconque, la ou les fibres optiques constituant les fils de trames ou les fils de chaîne et étant éventuellement associées à des fibres classiques, par exemple du coton, du lin, de la soie ou des fibres textiles synthétiques, dans laquelle les fibres optiques sont regroupées en un ou plusieurs faisceaux pour réaliser des motifs lumineux.

8. Lampe frontale selon la revendication 1 **caractérisée en ce que** ledit bandeau de maintien comporte :
- une première partie avant rigide ou semi-rigide (210) sur laquelle sont positionnées la ou les fibres optiques ainsi que ledit diffuseur optique ; et
- une seconde partie arrière élastique (220) permettant de refermer le bandeau de maintien et facilitant la fixation de ce dernier sur la tête d'un utilisateur.

9. Lampe frontale selon l'une quelconque des revendications précédentes **caractérisée en ce que** la lampe est une lampe compacte comportant le module lumineux et une source d'alimentation.

## Patentansprüche

1. Frontlampe mit:
einem kompakten Gehäuse (21, 100), das mittels eines Stirnbandes vorwärts am Kopf eines Benutzers befestigt werden kann, wobei das Gehäuse ein mit einer Lichtquelle versehenes Lichtmodul (50) aufweist, wobei das Lichtmodul (50) eine Verbindungsschnittstelle für mindestens eine optische Faser (23a, 23b) aufweist; und
ein Stirnband (22), mit dem das Gehäuse am Kopf eines Benutzers befestigt werden kann,
**dadurch gekennzeichnet, dass** es ferner Folgendes umfasst:
eine optische Faser, die zumindest innerhalb des Stirnbandes oder alternativ außerhalb angeordnet ist und ein erstes und ein zweites Ende umfasst, wobei das erste Ende mit der Verbindungsschnittstelle des Lichtmoduls (50) verbunden ist;
mindestens einen optischen Diffusor, der sich seitlich oder an der Rückseite des Bandes befindet, wobei der optische Diffusor mit dem zweiten Ende der optischen Faser verbunden ist;
so dass die Lichtquelle gleichzeitig die Erzeugung eines nach vorne projizierten Lichtstrahls und einer Rück- oder Seitenlichtsignalisierung ermöglicht.

2. Frontlampe nach Anspruch 1, **dadurch gekennzeichnet, dass** die optische Faser oder die optischen Fasern innerhalb des Stirnbandes (22) angeordnet sind.

3. Frontlampe nach Anspruch 1, **dadurch gekennzeichnet, dass** die optische Faser oder die optischen Fasern außerhalb des Stirnbandes (22) angeordnet sind.

4. Frontlampe nach Anspruch 1, **dadurch gekennzeichnet, dass** der optische Diffusor an der Rückseite des Stirnbandes angeordnet ist.

5. Frontlampe nach Anspruch 1, **dadurch gekennzeichnet, dass** das Band zwei optische Diffusoren umfasst, wobei jeder optische Diffusor an einer Seite angeordnet ist.

6. Frontlampe nach Anspruch 1, **dadurch gekennzeichnet, dass** die optische Faser oder die optischen Fasern innerhalb des Stirnbandes geflochten sind, um ein Leuchtmuster oder Logo zu bilden.

7. Frontlampe nach Anspruch 6, **dadurch gekennzeichnet, dass** die optische Faser oder die optischen Fasern mittels eines beliebigen Webprozesses in dem Stirnband eingearbeitet werden, wobei die optische Faser oder die optischen Fasern, die die Schussfäden oder Kettfäden bilden und gegebenenfalls herkömmlichen Fasern zugeordnet sind, z.B. Baumwolle, Leinen, Seide oder synthetische Textilfasern, bei denen die optischen Fasern zu einem oder mehreren Bündeln gruppiert sind, um Lichtmuster zu erzeugen.

8. Frontlampe nach Anspruch 1, **dadurch gekennzeichnet, dass** das Stirnband Folgendes umfasst:
- ein erstes starres oder halbstarres Vorderteil (210), auf dem die optische Faser oder die optischen Fasern positioniert sind, sowie der optische-Diffusor; und
- ein zweites elastisches Rückteil (220), der das Schließen des Stirnbandes ermöglicht und dessen Befestigung am Kopf eines Benutzers erleichtert.

9. Frontlampe nach einem der vorhergehenden Ansprüche, **dadurch gekennzeichnet, dass** die Lampe eine Kompaktlampe ist, die das Lichtmodul und eine Stromquelle umfasst.

## Claims

1. Headlamp comprising:
a compact housing (21, 100), which can be fixed to the head of a user forwards by means of a retaining strip, said housing comprising a light module (50) provided with a light source, said light module (50) comprising a connection interface for at least one optical fiber (23a, 23b); and
a retaining strip (22) allowing the housing to be fixed to the head of a user,
**characterized in that** it further comprises :
an optical fiber at least disposed inside the retaining strip or alternatively outside and comprising a first and a second end, said first end being connected to said interface for connection of the light module (50);
at least one optical diffuser located laterally or at the rear of the strip, said optical diffuser being connected to the second end of the optical fiber;
so that the light source simultaneously allows the generation of a light beam projected towards the front and a rear or side light signaling.

2. The headlamp according to claim 1 **characterized in that** the optical fiber or fibers are arranged inside the retaining strip (22).

3. The headlamp according to claim 1 **characterized in that** the optical fiber or fibers are arranged outside the retaining strip (22).

4. The headlamp according to claim 1 **characterized in that** said optical diffuser is positioned at the rear of the retaining strip.

5. The headlamp according to claim 1 **characterized in that** the strip comprises two optical diffusers, each optical diffuser being located at one side.

6. The headlamp according to claim 1 **characterized in that** the optical fiber or fibers are braided within said retaining strip so as to form a luminous pattern or logo.

7. The headlamp according to claim 6 **characterized in that** the optical fiber or fibers are incorporated within the retaining strip by means of any weaving process, the optical fiber or fibers constituting the weft threads or warp threads and being possibly associated with conventional fibers, for example cotton, linen, silk or synthetic textile fibers, in which the optical fibers are grouped into one or more bundles to produce light patterns.

8. The headlamp according to claim 1 **characterized in that** said retaining strip comprises:
- a first rigid or semi-rigid front part (210) on which the optical fiber or fibers are positioned as well as said optical diffuser; and
- a second elastic rear part (220) enabling the retaining strip to be closed and facilitating the fixing of the latter on the head of a user.

9. The headlamp according to any one of the preceding claims, **characterized in that** the lamp is a compact lamp comprising the light module and a power source.
